# EUROPÄISCHE PATENTANMELDUNG

(11) **EP 2 148 073 A2**
(43) Veröffentlichungstag der Anmeldung: **27.01.2010**
(21) Anmeldenummer: 09006869.3
(22) Anmeldetag: 22.05.2009
(51) Int. Cl.: F02K 7/10, F23R 5/00

(54) **Staustrahltriebwerk mit verschmeltzbarer Gasleitrohrbeschichtung**

(30) Priorität: 24.07.2008 DE 102008034454
(71) Anmelder: Bayern-Chemie Gesellschaft für flugchemische Antriebe mbH, 84544 Aschau a. Inn (DE)
(72) Erfinder: Ramsel, Jürgen, 84559 Kraiburg (DE); Klose, Göran, 84544 Aschau am Inn (DE)
(74) Vertreter: Haft, von Puttkamer, Berngruber, Karakatsanis

(57) **Zusammenfassung**

Ein Flugkörper (1) mit einem Staustrahltriebwerk (2) mit einer Brennkammer (3) weist einen Generator (11) mit einem Festtreibstoff (14) zur Erzeugung eines Brenngases (7) in einer Brenngasgeneratorkammer (9) auf, welche mit der Brennkammer (3) über ein Gasleitrohr (8) verbunden ist. Die Innenwand (15) des Gasleitrohres (8) ist mit einer Beschichtung (17) versehen, die bei einer Temperatur unterhalb der Brenngastemperatur schmilzt oder sich zersetzt.

## Beschreibung

Die Erfindung bezieht sich auf einem Flugkörper mit einem Staustrahltriebwerk nach dem Oberbegriff des Anspruchs 1.

Das Brenngas, das bei einem solchen Staustrahltriebwerk aus dem Festtreibstoff entsteht, enthält flüssige und feste Partikel, welche sich in der Anfangsphase des Betriebs des Staustrahltriebwerks an der Innenwand des kalten Gasleitrohres als Schlacke fest haftend absetzen. Dadurch verkleinert sich der Strömungsquerschnitt des Gasleitrohres mit der Folge, dass der Druck in der Brenngasgeneratorkammer und damit die Abbrandrate des Festtreibstoffes ansteigen kann. Vor allem bei einem Flug in größer Höhe kann dies zu Problemen führen, da sich durch die geringere Luftdichte die Luftzufuhr in den Brennraum des Staustrahltriebwerks verringert und daher auch die Brenngaszufuhr und damit die Abbrandrate verringert werden soll.

Aufgabe der Erfindung ist es daher, eine Beeinflussung der Abbrandrate durch Schlackenbildung im Gasleitrohr weitgehend zu verhindern.

Dies wird mit dem im Anspruch 1 gekennzeichneten Flugkörper erreicht. In den Unteransprüchen sind vorteilhafte Ausgestaltungen der Erfindung wiedergegeben.

Nach der Erfindung ist die Innenwand des Gasleitrohres mit einer Beschichtung versehen, die bei einer Temperatur unterhalb der Brenngastemperatur schmilzt oder sich zersetzt.

D.h. nach der Erfindung setzt sich zwar während der Anfangsphase des Betriebs des Staustrahltriebwerks ebenfalls Schlacke aus dem heißen Brenngas an der Innenwand des kalten Gasleitrohres ab, jedoch auf dieser Beschichtung, die schmilzt bzw. sich zersetzt, sobald das kalte Gasleitrohr durch die heißen Brenngase aufgeheizt worden ist.

Durch das Schmelzen bzw. Zersetzen der Beschichtung verliert die Schlacke ihre Haftung an der Innenwand des Gasleitrohres. Die Schlacke, die keinen Halt mehr hat, rutscht damit als Ganzes oder in Brocken aus dem Gasleitrohr in den Brennraum, wodurch der ursprüngliche Strömungsquerschnitt des Gasleitrohres wiederhergestellt ist. Durch den wiederhergestellten großen ursprünglichen Strömungsquerschnitt des Gasleitrohres verringert sich der Druck in der Brenngasgeneratorkammer und damit die Abbrandrate des Festtreibstoffes. Damit kann insbesondere auch bei einem Flug in großer Höhe die Brenngaszufuhr ausreichend reduziert und damit die Stabilität des Antriebssystems gewährleistet werden.

Die Temperatur, bei der die Beschichtung an der Innenwand des Gasleitrohres schmilzt bzw. sich zersetzt, liegt vorzugsweise mindestens bei 300 °C unter der Brenngastemperatur. D.h., da die Brenngastemperatur in der Regel bei ca. 1.900 °C liegt, unter 1.600 °C. Auf der anderen Seite soll sich die Beschichtung nicht zu früh ablösen, damit ein möglichst großer Teil der Schlacke, der sich in der Anfangsphase an der kühlen, also noch nicht auf Brenngastemperatur erhitzten Gasleitrohrinnenwand ablagert, sich auf der Beschichtung abscheidet. Daher sollte die Schmelz- oder Zersetzungstemperatur der Beschichtung nicht unter 300 °C liegen. Im Allgemeinen liegt die Schmelz- oder Zersetzungstemperatur der Beschichtung bei etwa 400 °C, während die maximale Schmelz- oder Zersetzungstemperatur bei etwa 1.200°C liegt.

Die Beschichtung kann aus einer Schicht, also aus ein und demselben Werkstoff gebildet sein. Sie kann jedoch auch aus zwei oder mehreren Schichten gebildet sein, die jeweils aus einem anderen Werkstoff bestehen. Dabei weist die erste Schicht, die direkt auf der Innenwand des Gasleitrohres angeordnet ist, also an ihr anliegt, eine höhere Schmelz- bzw. Zersetzungstemperatur auf als die Schicht, die auf der ersten Schicht angeordnet ist. D.h., bei einer aus mehr als zwei Schichten bestehenden Beschichtung nimmt die Schmelz- bzw. Zersetzungstemperatur von der der Gasleitrohrinnenwand benachbarten Schicht zu der von der Innenwand am weitesten entfernt angeordneten Schicht schrittweise ab.

Bei einer z. B. aus zwei Schichten bestehenden Beschichtung wird damit erreicht, dass der ursprüngliche größere Strömungsquerschnitt des Gasleitrohres schon relativ früh zum ersten mal hergestellt wird, nämlich dann, wenn die von der Innenwand entfernt angeordnete, und Schlacke bedeckte Schicht mit der geringeren Schmelz- bzw. Zersetzungstemperatur schmilzt bzw. sich zersetzt und danach nochmals nach einem zweiten Intervall gegen Ende der Anfangsphase des Betriebs des Triebwerks, wenn die an der Innenwand anliegende Schicht schmilzt bzw. sich zersetzt, wodurch die Schlacke, die sich in dem zweiten Intervall in dem Gasleitrohr abgeschieden hat, entfernt wird.

Der Werkstoff, aus dem die Beschichtung gebildet ist, besteht vorzugsweise aus Metall.

Es können jedoch auch andere Materialien verwendet werden. Beispielsweise kann der Werkstoff ein bei hoher Temperatur schmelzender oder sich zersetzender Kunststoff sein, z.B. ein Polyfluorkohlenstoff oder Polyfluorkohlenwasserstoff, wie Polytetrafluorethylen, ein Silikonkunststoff, ein Hochleistungskunststoff wie Polyetherether-Keton und dergleichen. Auch können keramische Werkstoffe für die Beschichtung verwendet werden, beispielsweise auch Glas.

Der Metallwerkstoff, der für die Beschichtung verwendet wird, kann ein reines Metall oder eine Metalllegierung sein, sofern er einen Schmelzpunkt besitzt, der unterhalb der Brenngastemperatur liegt.

Als Metalle sind dabei beispielsweise Aluminium, Eisen, Nickel, Kupfer, Silber, Zink, Zinn und Blei verwendbar, ferner Legierungen mit einer dieser Metalle als Hauptkomponente. In der Praxis hat sich vor allem Zink mit einem Schmelzpunkt von 420 °C als geeignet erwiesen.

Dabei kann die gesamte Beschichtung aus Zink oder einer Zinklegierung bestehen. Während beispielsweise eine Beschichtung aus zwei Metallschichten aus einer Kupferoder Silberschicht als der der Gasleitrohrinnenwand benachbarten Schicht mit einem Schmelzpunkt von 1083 °C bzw. 962 °C und einer Zinkschicht als von der Innenwand entfernt angeordneter Schicht gebildet sein kann.

Die Schichtdicke der Beschichtung, die aus ein und demselben Werkstoff besteht, kann beispielsweise bis zu 5 mm betragen, vorzugsweise 0,5 bis 2 mm. Die gleiche Schichtdicke weisen die einzelnen Schichten der mehrschichtigen Beschichtung auf.

Das Gasleitrohr ist vorzugsweise zylindrisch ausgebildet. Um das Lösen der Schlacke auf der geschmolzenen bzw. zersetzten Beschichtung von der Innenwand des Gasleitrohres zu erleichtern, hat es sich jedoch als zweckmäßig erwiesen, das Gasleitrohr, jedenfalls die Innenwand des Gasleitrohres von der Brenngasgeneratorkammer zur Brennkammer hin vorzugsweise konisch zu erweitern.

Das Gasleitrohr besteht wie üblich aus einem hochschmelzenden Material, insbesondere einem hochschmelzenden Metall wie Molybdän oder einem Keramikwerkstoff.

Das Brenngas wird aus einem Festtreibstoff gewonnen, d.h. einem festen Brennstoff, dem ein Oxidationsmittel zugesetzt ist, um unter Bildung eines brennstoffreichen Gases abzubrennen. Beispielsweise kann der Treibstoff einen vernetzbaren Kunststoffbinder, Brennstoffpartikel, z.B. Metallpartikel und z.B. Ammoniumperchlorat als Oxidationsmittel umfassen.

Zum Beschichten der Innenwand des Gasleitrohres können chemische, mechanische, thermische und thermomechanische Verfahren angewendet werden. Beispielsweise kann die Beschichtung durch Gasphasenabscheidung, Spritzen, insbesondere thermisches Spritzen, Galvanisieren, Anschmelzen oder Auflöten erfolgen. Weiterhin sind eingepresste, geschraubte oder anderweitige Einsätze möglich.

Nachstehend ist die Erfindung anhand der beigefügten Zeichnung näher erläutert. Darin zeigen jeweils schematisch.
- Figur 1: einen Längsschnitt durch einen Flugkörper mit einem Gasleitrohr nach der Anfangsphase des Betriebs des Staustrahltriebwerks nach dem Stand der Technik;
- Figur 2: einen Längsschnitt durch das Gasleitrohr nach der Anfangsphase des Betriebs des Staustrahltriebwerks, jedoch mit einer erfindungsgemäßen Beschichtung;
- Figur 3: einen Querschnitt entlang der Linie III-III in Figur 2; und
- Figur 4: einen der Figur 3 entsprechenden Querschnitt, jedoch mit einer Beschichtung aus zwei Schichten.

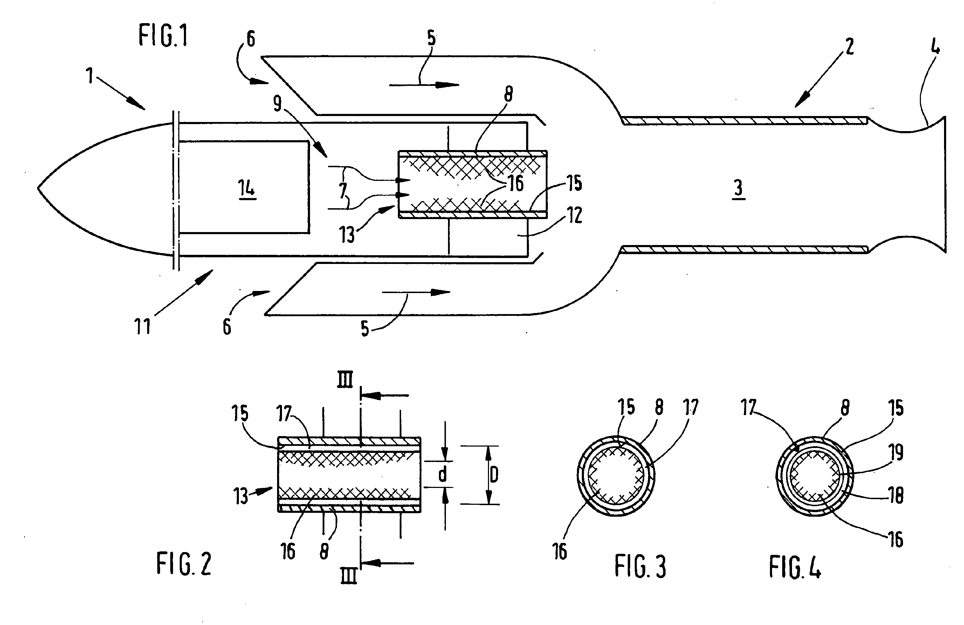

Gemäß Figur 1 weist der Flugkörper 1 ein Staustrahltriebwerk 2 mit einer Brennkammer 3 auf, die hinten in einer Strahlrohrdüse 4 endet.

Der Brennkammer wird zum Betrieb des Staustrahltriebwerks 2 Luft gemäß dem Pfeil 5 über den Lufteinlauf 6 zugeführt, ferner Brenngas gemäß dem Pfeil 7 über das Gasleitrohr 8, das die Kammer 9 des Brenngasgenerators 11 mit der Brennkammer 3 des Staustrahltriebwerks 2 verbindet.

Durch die hohe Fluggeschwindigkeit des Flugkörpers 1 wird die Luft im Lufteinlauf 6 verdichtet und in die Brennkammer 3 geleitet. Durch Verbrennung des Brenngases 7 mit der verdichteten Luft in der Brennkammer 3 gewinnt das Strahltriebwerk 2 seinen Schub.

Durch den Brenngasgeneratorboden 12, der von dem Gasleitrohr 8 durchsetzt wird, wird die Brennkammer 3 von der Brenngasgeneratorkammer 9 getrennt.

Das Gasleitrohr 8 weist in der Brenngasgeneratorkammer 9 eine oder mehrere Öffnungen 13 auf, wobei ein nicht dargestelltes Absperrorgan vorgesehen ist, mit dem die Durchflussmenge des Brenngases 7 in dem Gasleitrohr 8, mit einer nicht dargestellten Steuereinrichtung gesteuert werden kann.

Vor dem Gasleitrohr 8 ist in der Brenngeneratorkammer 9 des Brenngasgenerators 11 ein Festtreibstoff 14 angeordnet. Bei Abbrand des Festtreibstoffs 14 nach Anzünden, z.B. mit einer nicht dargestellten Anzündeinrichtung, entsteht das Brenngas 7. Der Festtreibstoff 14 kann z.B. aus einem Kunststoffbinder mit Brennstoffpartikeln und einem Oxidationsmittel bestehen, um bei Abbrand ein brennstoffreiches Brenngas zu bilden, das feste und flüssige Partikel enthält.

Wenn das heiße Brenngas in der Anfangsphase des Betriebs des Staustrahltriebwerks 2 in das Gasleitrohr 8 gelangt, das sich in der Anfangsphase des Betriebs des Staustrahltriebwerks 2 auf einer wesentlich niedrigeren Temperatur befindet, schlagen sich die Partikel als Schlacke 16 an der Innenwand 15 des Gasleitrohres 8 nieder, wodurch der ursprüngliche Strömungsquerschnitt in dem Gasleitrohr 8 mit dem Durchmesser D auf den Strömungsquerschnitt mit dem Durchmesser d mehr oder weniger unkontrolliert herabgesetzt wird.

Dies kann eine erhebliche und zudem unkontrollierte Erhöhung des Drucks in der Brenngasgeneratorkammer 9 und damit eine erhöhte Abbrandrate des Feststofftreibsatzes 14 während des gesamten Betriebs des Staustrahltriebwerks 2 zur Folge haben.

Gemäß Figur 2 ist daher erfindungsgemäß die Innenwand 15 des Gasleitrohres 8 mit einer Beschichtung 17 versehen, beispielsweise aus Zink, das bei 420 °C schmilzt. Dadurch verliert die Schlacke 16 nach dem Schmelzen des Zinks seinen Halt an der Rohrinnenwand 15 und rutscht damit als Ganzes oder in Brocken aus dem Gasleitrohr 8, wodurch der ursprüngliche Strömungsquerschnitt des Gasleitrohres 8 mit dem Durchmesser D wiederhergestellt wird.

Gemäß Figur 4 besteht die Beschichtung 17 an der Innenwand 15 des Gasleitrohres 8 aus zwei Schichten 18 und 19, und zwar einer der Innenwand 15 des Gasleitrohres 8 zugewandten Schicht 19 z.B. aus Kupfer oder Silber, das bei 1.083°C bzw. 962 °C schmilzt und einer Zinkschicht 19, die bei 420 °C schmilzt. Damit wird erreicht, dass der ursprüngliche Strömungsquerschnitt D während der Anfangsphase des Betriebs des Staustrahltriebwerkes 2 zweimal wiederhergestellt wird, und zwar zum ersten mal relativ früh nach Schmelzen der von der Innenwand 15 abgewandten Schicht 19 bei 420°C und dann später nochmals nach Schmelzen der weiteren der Innenwand 15 benachbarten Schicht 18 bei 1083°C bzw. 962°C. Bei höheren Temperaturen tritt erfahrungsgemäß keine weitere Verschlackung auf.

## Patentansprüche

1. Flugkörper mit einem Staustrahltriebwerk (2) mit einer Brennkammer (3) und einem Generator (11) mit einem Festtreibstoff (14) zur Erzeugung eines Brenngases (7) in einer Brenngasgeneratorkammer (9), welche mit der Brennkammer (3) über ein Gasleitrohr (8) verbunden ist, **dadurch gekennzeichnet, dass** die Innenwand (15) des Gasleitrohres (8) mit einer Beschichtung (17) versehen ist, die bei einer Temperatur unterhalb der Brenngastemperatur schmilzt oder sich zersetzt.

2. Flugkörper nach Anspruch 1, **dadurch gekennzeichnet, dass** die Schmelz- oder Zersetzungstemperatur der Beschichtung (17) niedriger als die Temperatur der Brenngase ist.

3. Flugkörper nach Anspruch 1 oder 2, **dadurch gekennzeichnet, dass** die Schmelz- oder Zersetzungstemperatur der Beschichtung (17) mindestens 300 °C beträgt.

4. Flugkörper nach einem der Ansprüche 1 bis 3, **dadurch gekennzeichnet, dass** die Beschichtung (17) durch eine Schicht aus ein und demselben Werkstoff gebildet wird.

5. Flugkörper nach einem der Ansprüche 1 bis 3, **dadurch gekennzeichnet, dass** die Beschichtung (17) aus wenigstens zwei Schichten (18, 19) aus unterschiedlichen Werkstoffen gebildet wird, wobei der Werkstoff der Schicht (18), die der Innenwand (15) des Gasleitrohres (8) benachbart ist, eine höhere Schmelz- bzw. Zersetzungstemperatur aufweist als der Werkstoff der von der Innenwand (15) entfernt angeordneten Schicht (19).

6. Flugkörper nach Anspruch 4 oder 5, **dadurch gekennzeichnet, dass** der Werkstoff der einen oder wenigstens einer der wenigstens zwei Schichten (18, 19) ein Metallwerkstoff ist.

7. Flugkörper nach Anspruch 4 oder 5, **dadurch gekennzeichnet, dass** die Schichtdicke der einen Schicht oder jeder der wenigstens zwei Schichten (18, 19) bis zu 5 mm beträgt.

8. Flugkörper nach Anspruch 4 und 6, **dadurch gekennzeichnet, dass** der Metallwerkstoff der einen Schicht Zink oder eine Zinklegierung ist.

9. Flugkörper nach Anspruch 5 und 6, **dadurch gekennzeichnet, dass** der Metallwerkstoff der der Innenwand (15) des Gasleitrohres (8) benachbarten Schicht (18) Zink oder eine Zinklegierung ist.

10. Flugkörper nach Anspruch 5 oder 6, **dadurch gekennzeichnet, dass** die von der Innenwand (15) des Gasleitrohres (8) entfernt angeordnete Schicht (19) niedriger schmelzend ist als die näher zur Innenwand (15) angeordnete Schicht (18).

11. Flugkörper nach Anspruch 1, **dadurch gekennzeichnet, dass** die Innenwand (15) des Gasleitrohres von der Brenngasgeneratorkammer (9) zur Brennkammer (3) hin konisch erweitert ist.
